# FASCICULE DE BREVET EUROPEEN

(11) **EP 2 569 143 B1**
(45) Date de publication et mention de la délivrance du brevet: **18.10.2017**
(21) Numéro de dépôt: 11723522.6
(22) Date de dépôt: 28.04.2011
(51) Int. Cl.: B29C 70/08, B29C 70/34, B29C 70/44, B29C 70/86, B29D 24/00

(54) **PROCÉDÉ DE FABRICATION D'UNE PIÈCE EN MATÉRIAU COMPOSITE À ÂME CREUSE**
VERFAHREN ZUR HERSTELLUNG EINES TEILS AUS EINEM VERBUNDSTOFF MIT EINEM HOHLKERN
PROCESS FOR MANUFACTURING A PART MADE OF A COMPOSITE HAVING A HOLLOW CORE

(30) Priorité: 11.05.2010 FR 1053667
(43) Date de publication de la demande: 20.03.2013
(73) Titulaire: Société Lorraine de Construction Aéronautique, 57190 Florange (FR); Arts & Metiers Paris Tech, 57070 Metz (FR); Ateliers Cini, 54510 Tomblaine (FR); Pole De Plasturgie De L'Est, 57506 Saint Avold (FR)
(72) Inventeur: CASTAGNET, Florence, F-78140 Velizy-Villacoublay (FR); HURLIN, Hervé, F-91430 Igny (FR); MARTIN, Patrick, F-54600 Villers-les-Nancy (FR); D'ACUNTO, Alain, F-57640 Saint Barbe (FR); MIHALUTA, Marius, F-57000 Metz (FR); PERRIN, Henri-François, F-57420 Pontoy (FR); BETTEGA, Louis, F-57220 Boucheporn (FR); CAUCHOIS, Jean-Pierre, F-67510 Obersteinbach (FR); CINI, Jérome, F-54770 Laitre s/s Amance (FR); MANGENOT, Richard, F-54115 Battigny (FR)
(74) Mandataire: Gaillarde, Frédéric F. Ch.
(86) Numéro de dépôt international: PCT/FR2011/050962
(87) Numéro de publication internationale: WO 2011/141661

(56) Documents cités:
- EP-A1- 1 897 680
- EP-A2- 1 005 978
- US-A1- 2010 080 980

## Description

L'invention se rapporte à un procédé de fabrication de pièces en matériau composite par moulage par transfert de résine.

Plusieurs procédés de moulage connus par imprégnation de fibres avec de la résine peuvent être utilisés pour réaliser les pièces en matériau composite et, notamment, les procédés de moulage employant des moules fermés.

En premier lieu, on peut citer le procédé de moulage par transfert de résine ou RTM, pour "Resin Transfert Molding".

Dans ce procédé RTM, un ensemble d'éléments fibreux est positionné de manière particulière autour d'un support et l'ensemble est placé à l'intérieur d'un moule fermé dont la forme générale correspond à celle de la pièce à réaliser.

Dans le procédé RTM traditionnel, ce moule est constitué d'un moule femelle ou matrice et d'une partie contre-moule ou poinçon.

On injecte alors une résine dans le moule puis on la polymérise. Les molécules de cette résine commencent alors à se lier entre elles et à former un réseau solide. On obtient ainsi une pièce rigide en matériau composite formé de fibres et de résine polymérisée.

On peut également citer le procédé de moulage par infusion de résine ou LRI (Liquid Resin Infusion).

De façon générale, un tel procédé met en oeuvre plusieurs étapes parmi lesquelles figure la mise en place d'éléments de renfort fibreux sur la forme d'un moule.

Le moule est ensuite refermé par l'intermédiaire d'un couvercle souple permettant le passage contrôlé d'une résine qui va infuser à l'intérieur des éléments de renfort fibreux puis polymériser, afin de donner une pièce rigide.

La propagation de la résine se fait par une force motrice créée par une dépression en certains points du couvercle souple, vers lesquels la résine introduite dans le moule se déplace.

Dans le procédé d'infusion traditionnel, l'outillage de moulage est ainsi formé d'un moule matrice et d'un couvercle étanche tel qu'une bâche comme partie contre moule.

Les pièces composites destinées à la construction aéronautique requièrent des performances mécaniques maximales pour des masses les plus faibles possibles.

Une solution à ces exigences est l'utilisation de matériaux composites tels que précédemment décrit, avec âme à cellule ouverte, de type nid d'abeille notamment.

L'utilisation d'une telle âme à l'intérieur d'une pièce composite présente de très bonnes caractéristiques mécaniques pour le domaine d'application, et ce notamment en compression, pour des densités faibles.

Ces produits sont largement utilisés dans l'industrie aéronautique et leur mise en oeuvre est rendue possible par l'utilisation de tissus préimprégnés de résine.

En effet, la résine, déjà présente dans les fibres ne peut pas migrer ou uniquement de façon modérée dans les cellules ouvertes de l'âme.

Toutefois, le développement des procédés de fabrication par transfert de résine, tels que précédemment décrit, permettrait d'optimiser encore la fabrication de telles pièces composites à âme alvéolaire à cellules ouvertes.

Malheureusement, un obstacle à l'utilisation des procédés de transfert de résine pour la fabrication de telles pièces réside dans le fait que la résine tend à pénétrer à l'intérieur des alvéoles de l'âme. Ce phénomène n'est pas souhaitable car il augmente la consommation de résine, alourdit la structure et diminue les performances de la structure alvéolaire, entre autres inconvénients.

Il existe par conséquent un besoin pour des procédés permettant la mise en oeuvre de techniques de fabrication de pièces composites à âme alvéolaire par procédé de moulage par transfert de résine.

Les documents EP 1 795 332 et EP 1 897 680 proposent une solution à cette problématique.

Chacun de ces documents utilise, d'une part, une couche intermédiaire obturante, disposée entre l'âme alvéolaire et les couches fibreuses, ladite couche obturante empêchant la migration de la résine vers les alvéoles de l'âme, et d'autre part, au moins une couche adhésive visant à assurer une bonne cohésion des couches fibreuses et de l'âme alvéolaire.

Plus précisément, le document EP 1 005 978 décrit une méthode de fabrication d'un matériau composite à âme alvéolaire comprenant les étapes visant à :
- appliquer une première couche adhésive sur une surface ouverte de l'âme alvéolaire,
- appliquer sur la couche adhésive un film solide,
- appliquer une deuxième couche adhésive sur la surface extérieure du film solide,
- disposer sur la deuxième couche adhésive l'ensemble de couches fibreuses,
- appliquer la résine selon un procédé RTM et procéder à sa polymérisation

Le document EP 1 879 680 vise également un procédé de fabrication d'un matériau composite à âme alvéolaire comprenant les étapes visant à :
- mettre en place d'une couche adhésive durcissable sur au moins une surface ouverte de l'âme alvéolaire,
- mettre en place d'une couche de blocage sur la couche adhésive,
- mettre en place des couches fibreuses,
- appliquer de la résine selon un procédé d'infusion sous vide.

Ces procédés nécéssitent toutefois un nombre important de couches intermédiaires (adhésive, blocante...), ce qui rend également la mise en oeuvre du procédé de fabrication relativement complexe.

La présente invention permet de pallier les inconvénients précédemment mentionnés et consiste pour ce faire en un procédé tel que défini par la revendication 1.

Ainsi en utilisant une couche adhésive apte à présenter également des propriétés bloquantes à la résine, il est possible d'étanchéifier l'âme creuse et d'éviter le remplissage de l'âme par la résine lors des processus ultérieurs de traitement.

De manière préférentielle, la couche adhésive bloquante est un pli de colle supporté.

Avantageusement encore, la couche adhésive bloquante est supportée par une trame de fibres de verre ou de polymère.

Préférentiellement, les caractéristiques d'étanchement sont obtenues par un assemblage intime du pli de colle avec les fibres adjacentes.

Selon l'invention, une force de pression est appliquée au moins sur la couche adhésive selon une direction perpendiculaire à cette dernière.

En effet, il a été constaté de manière surprenante que l'application d'une force de pression sur le pli adhésif dans une direction strictement perpendiculaire à ce dernier permettait d'augmenter considérablement les propriétés d'étanchéité à la résine.

Selon un mode de réalisation préféré, la force de pression est appliquée par mise sous vide de l'ensemble à étanchéifier.

Préférentiellement, la mise sous vide s'effectue à l'aide d'au moins une membrane souple ou semi-rigide servant de contre-moule.

Avantageusement, la force de pression est appliquée sur la couche adhésive par l'intermédiaire d'au moins une couche drainante.

La présence d'une couche drainante permet d'uniformiser la force de pression appliquée. Cela vise à limiter l'affaissement de la couche adhésive à l'intérieur de l'âme creuse et d'éviter la dégradation de ses performances d'étanchéification par une répartition hétérogène de l'épaisseur de colle de la couche adhésive en raison de surpressions locales qui doivent être évitées.

De manière complémentaire, le procédé comprend une étape supplémentaire visant à appliquer sur la couche adhésive au moins un pli de fibres. Cette étape supplémentaire permet la réalisation d'une préforme de pièce composite avec âme creuse étanchéifiée.

Avantageusement, le pli de fibres comprend au moins un pli de fibres non tissées, notamment de fibres de carbone, possédant une perméabilité homogène au niveau des fibres. L'insertion d'un tel pli non tissé permet d'éviter la formation de points d'embuvage privilégiés. Cela limite également la migration de la colle vers les plis de fibres sèches lors de son cycle de polymérisation et contribue à l'amélioration des propriétés mécaniques de l'interface âme-peau composite.

Selon un mode préféré de réalisation, le pli de fibres est un pli de fibres sèches.

De manière complémentaire, le procédé comprend une étape supplémentaire visant à appliquer de la résine selon un procédé de moulage par transfert de résine et procéder à la polymérisation de ladite résine dans le même habillage. Ainsi les temps de mise en oeuvre de ce procédé sont fortement réduits. Dans ce cas, un empilement unique permet la réalisation de la préforme, associé à un cycle de cuisson propre, la polymérisation de la couche adhésive, associé à son cycle de polymérisation ou pré-polymérisation, la réalisation de l'imprégnation de la préforme par la résine, associé à son cycle de polymérisation propre.

Selon une variante de réalisation de l'invention, le procédé comprend une étape additionnelle intermédiaire visant à préformer les plis de fibres.

La présente invention se rapporte également à une pièce en matériau composite pouvant être obtenue par un procédé selon l'invention. Ladite pièce pourra être la pièce en matériau composite terminée et complète ou alors une pièce intermédiaire telle que âme creuse étanchéifiée, préforme de plis fibreux et âme étanchéifiée.

Avantageusement, l'âme creuse est une âme alvéolaire, notamment de type nid d'abeille. Il pourra cependant également s'agir d'un autre type d'âme creuse voire une combinaison d'âmes de diverses natures.

La présente invention sera mieux comprise à la lumière de la description détaillée qui suit en regard du dessin annexé dans lequel :
- la figure 1 illustre schématiquement la mise en oeuvre pour la fabrication d'une âme creuse étanchéifiée pour utilisation dans la fabrication d'une pièce en matériau composite.
- la figure 2 illustre schématiquement la mise en oeuvre pour la fabrication d'une préforme et d'une âme creuse étanchéifiée pour pièce en matériau composite sandwich
- la figure 3 illustre schématiquement la mise en oeuvre pour fabrication d'une pièce à âme creuse complète en matériau composite.

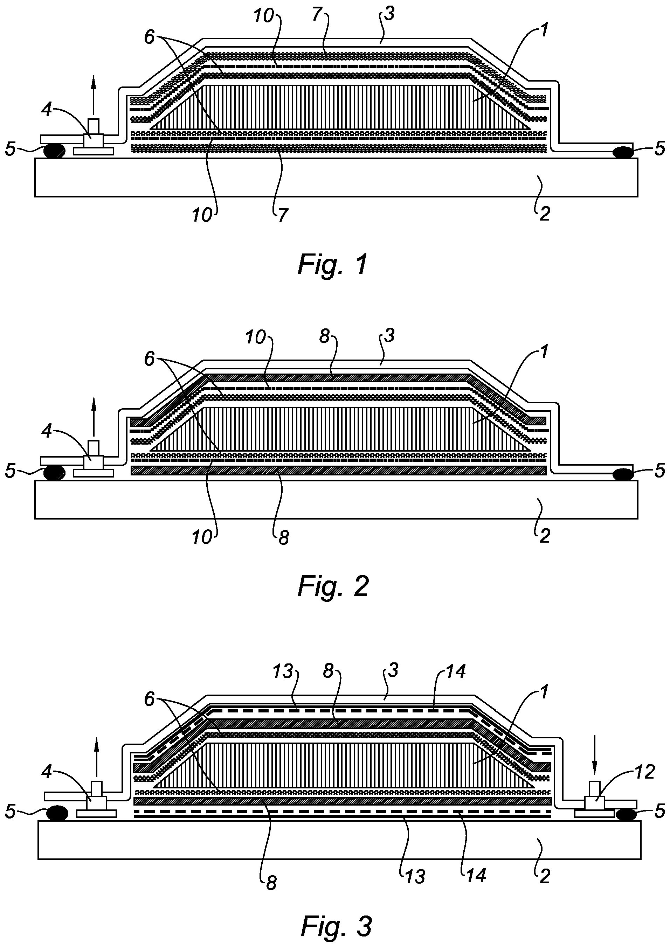

La figure 1 illustre la fabrication d'une âme alvéolaire creuse 1 étanchéifiée pour utilisation dans la fabrication d'une pièce en matériau composite.

Pour ce faire, l'âme alvéolaire 1 est disposée sur un moule 2 et recouverte d'une membrane semi-rigide 3 formant contre moule et associée à des moyens 4 de mise sous vide de l'espace intérieur défini par le moule 2 et la membrane semi-rigide 3.

Le vide appliqué pourra être typiquement un vide inférieur à 100 mbar et de préférence supérieur à 4 mbar.

La membrane semi-rigide 3 pourra être une membrane silicone, par exemple.

Des joints 5 assurent l'étanchéité entre la membrane semi-rigide 3 et le moule 2.

Conformément à l'invention, l'âme alvéolaire 3 présente des surfaces ouvertes supérieure et inférieure qui, conformément à l'invention, sont recouvertes d'un fil de colle polymérisable 6, notamment de type colle époxy.

Préférentiellement, le film de colle polymérisable 6 est supporté, c'est-à-dire renforcé, par une trame, notamment en fibres de verre.

Conformément à l'invention, le film de colle 6 possède lors de sa polymérisation des propriétés de blocage de la résine qui sera utilisée pour la fabrication du matériau composite.

L'étanchéité de l'âme est améliorée en appliquant sur le film de colle 6 une pression perpendiculaire au film de colle 6 par l'intermédiaire de la membrane semi-rigide 3 grâce à sa mise sous vide. La pression est ainsi également appliquée sur le film de colle 6 inférieur.

La pression appliquée doit de préférence être la plus uniforme possible, notamment afin d'éviter des défauts de type affaissement du film de colle 6 dans les alvéoles de l'âme alvéolaire 3.

Les caractéristiques de rigidité et d'épaisseur de la membrane semi-rigide 3 permettront de contrôler la répartition de la pression appliquée sur le film de colle 6. La membrane semi-rigide 3 pourra le cas échéant être remplacée par une bâche à vide si les propriétés de pression requises le permettent.

Afin d'assurer l'homogénéité du champ de pression appliqué, il est disposé entre la membrane semi-rigide 3 et le film de colle 6, une couche drainante 7. Une deuxième couche drainante est disposée entre le moule 2 et le film de colle 6 inférieur.

La couche drainante 7 pourra être, par exemple, un pli de feutre, un pli tissé ou un autre produit poreux. Ses caractéristiques de rigidité permettront également de modifier les paramètres locaux de pression, notamment toujours afin d'assurer l'uniformité du champ de pression appliqué.

L'ensemble pourra également être équipé d'un film séparateur 10 visant à assurer une bonne séparation de la couche drainante 7 et de la membrane semi rigide 3 après l'opération. Le film séparateur 10 vise également à limiter la migration de la colle vers les autres plis.

La figure 2 illustre schématiquement la fabrication d'une préforme pour pièce en matériau composite à âme creuse étanchéifiée.

Le procédé de mise en oeuvre de la figure 2 diffère de celui de la figure 1 en ce que la couche drainante 7 est remplacée par un ensemble de plis fibreux 8 secs, c'est-à-dire non préimprégnés de résine.

L'ensemble de plis fibreux 8 pourra ainsi être moulé à la forme de l'âme alvéolaire 1 avant application de la résine en même temps que ladite âme alvéolaire 1 est étanchéifiée.

La figure 3 illustre schématiquement la fabrication d'une pièce à âme creuse 3 complète en matériau composite.

Ainsi, à la différence des modes de réalisation précédents, l'ensemble de la pièce composite est réalisé en une seule étape. Pour ce faire, le procédé et les éléments décrits précédemment sont complétés par des moyens d'injection de résine 12 permettant la mise en oeuvre du cycle de moulage par transfert de résine.

Ainsi, il conviendra de prévoir un média de distribution de la résine 13, le film séparateur 10 étant remplacé par un tissu d'arrachage 14 en vue du démoulage après polymérisation de la résine.

Afin d'empêcher la migration de la colle vers les plis de fibres sèches 8, on pourra prévoir d'intercaler un pli de fibres de carbone non tissé dont la perméabilité à l'échelle des fibres est homogène. Ce pli de fibres non tissées permet d'éviter les points d'embuvage privilégiés, ce qui entraînerait la dégradation des performances d'étanchéité du film de colle 6 de par une répartition non homogène de la colle.

Un tel pli de fibres non tissées participe également à la structure de l'ensemble et à l'amélioration des propriétés mécaniques de la pièce.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de fabrication d'une pièce en matériau composite à âme (1) creuse comprenant les étapes suivantes visant à :
- appliquer une couche adhésive (6) sur une surface ouverte de l'âme creuse, ladite
couche adhésive étant une couche adhésive polymérisable bloquante présentant après polymérisation des propriétés d'étanchéité par rapport à une résine et apte à empêcher sa diffusion vers l'intérieur de l'âme creuse
- procéder à la polymérisation de la couche adhésive bloquante de manière à réaliser l'étanchéité de l'âme creuse,
le procédé étant **caractérisé en ce qu'**une force de pression est appliquée au moins sur la couche adhésive (6) selon une direction perpendiculaire à cette dernière.

2. Procédé selon la revendication 1, **caractérisé en ce que** la couche adhésive bloquante est un pli de colle (6) supporté.

3. Procédé selon la revendication 2, **caractérisé en ce que** la couche adhésive bloquante (6) est supportée par une trame de fibres de verre ou de polymère.

4. Procédé selon l'une des revendications 1 à 3, **caractérisé en ce que** la force de pression est appliquée par mise sous vide de l'ensemble à étanchéifier.

5. Procédé selon l'une des revendications 1 à 4, **caractérisé en ce que** la mise sous vide s'effectue à l'aide d'au moins une membrane (3) souple ou semi-rigide servant de contre-moule.

6. Procédé selon l'une quelconque des revendications 1 à 5, **caractérisé en ce que** la force de pression est appliquée sur la couche adhésive (6) par l'intermédiaire d'au moins une couche drainante (7).

7. Procédé selon l'une quelconque des revendications 1 à 6, **caractérisé en ce qu'**il comprend une étape supplémentaire visant à appliquer sur la couche adhésive (6) au moins un pli de fibres (8).

8. Procédé selon la revendication 7, **caractérisé en ce que** le pli de fibres (8) comprend au moins un pli de fibres non tissées, notamment de fibres de carbone, possédant une perméabilité homogène au niveau des fibres.

9. Procédé selon l'une quelconque des revendications 7 ou 8, **caractérisé en ce que** le pli de fibres (8) est un pli de fibres sèches.

10. Procédé selon l'une quelconque des revendications 7 à 9, **caractérisé en ce qu'**il comprend une étape supplémentaire visant à appliquer de la résine selon un procédé de moulage par transfert de résine, notamment sous vide, et procéder à la polymérisation de ladite résine dans un même habillage.

11. Procédé selon l'une quelconque des revendications 7 à 10, **caractérisé en ce qu'**il comprend une étape additionnelle intermédiaire visant à préformer les plis de fibres.

## Patentansprüche

1. Verfahren zur Herstellung eines Werkstücks aus Verbundwerkstoff mit Hohlkern (1), die folgenden Schritte umfassend:
- Aufbringen einer Haftschicht (6) auf einer offenen Oberfläche des Hohlkerns, wobei die besagte Haftschicht eine blockierende polymerisierbare Haftschicht ist, die nach der Polymerisierung Dichteigenschaften im Verhältnis zu einem Harz aufweist, und imstande ist, dessen Diffusion ins Innere des Hohlkerns zu verhindern
- Vornehmen der Polymerisierung der blockierenden Haftschicht, um die Dichtheit des Hohlkerns zu realisieren,
wobei das Verfahren **dadurch gekennzeichnet ist, dass** eine Druckkraft zumindest an der Haftschicht (6) in eine Richtung senkrecht zu selbiger angelegt wird.

2. Verfahren nach Anspruch 1, **dadurch gekennzeichnet, dass** die blockierende Haftschicht eine getragene Kleberlage (6) ist.

3. Verfahren nach Anspruch 2, **dadurch gekennzeichnet, dass** die blockierende Haftschicht (6) von einem Raster aus Glasfasern oder Polymer getragen wird.

4. Verfahren nach einem der Ansprüche 1 bis 3, **dadurch gekennzeichnet, dass** die Druckkraft durch Vakuumbildung an der abzudichtenden Einheit angelegt wird.

5. Verfahren nach einem der Ansprüche 1 bis 4, **dadurch gekennzeichnet, dass** die Vakuumbildung mithilfe von zumindest einer flexiblen oder halbstarren Membran (3) erfolgt, die als Gegenform dient.

6. Verfahren nach einem der Ansprüche 1 bis 5, **dadurch gekennzeichnet, dass** die Druckkraft an der Haftschicht (6) anhand von zumindest einer Drainageschicht (7) angelegt wird.

7. Verfahren nach einem der Ansprüche 1 bis 6, **dadurch gekennzeichnet, dass** es einen zusätzlichen Schritt umfasst, der darauf abzielt, auf der Haftschicht (6) zumindest eine Faserlage (8) aufzubringen.

8. Verfahren nach Anspruch 7, **dadurch gekennzeichnet, dass** die Faserlage (8) zumindest eine Lage aus Faserflies, vor allem aus Kohlenstofffasern umfasst, die eine einheitliche Durchlässigkeit im Bereich der Fasern besitzen.

9. Verfahren nach einem der Ansprüche 7 oder 8, **dadurch gekennzeichnet, dass** die Faserlage (8) eine Lage aus trockenen Fasern ist.

10. Verfahren nach einem der Ansprüche 7 bis 9, **dadurch gekennzeichnet, dass** es einen zusätzlichen Schritt umfasst, der darauf abzielt, Harz nach einem Formverfahren durch Harztransfer, vor allem unter Vakuum aufzubringen, und die Polymerisierung des besagten Harzes in einer selben Verkleidung vorzunehmen.

11. Verfahren nach einem der Ansprüche 7 bis 10, **dadurch gekennzeichnet, dass** es einen zusätzlichen Zwischenschritt umfasst, der darauf abzielt, die Faserlagen vorzuformen.

## Claims

1. A method for manufacturing a hollow core composite material part (1) comprising the following steps aiming to:
- apply an adhesive layer (6) on an open surface of the hollow core, said adhesive layer being a blocking polymerizable adhesive layer having, after polymerization, sealing properties relative to a resin and capable of preventing its spread inwardly of the hollow core
- proceeding with the polymerization of the blocking adhesive layer so as to carry out the sealing of the hollow core,
the method being **characterized in that** a pressure force is applied at least on the adhesive layer (6) according to a direction perpendicular to said adhesive layer.

2. The method according to claim 1, **characterized in that** the blocking adhesive layer is a supported adhesive ply (6).

3. The method according to claim 2, **characterized in that** the blocking adhesive layer (6) is supported by a weft of glass fibers or polymer fibers.

4. The method according to any of claims 1 to 3, **characterized in that** the pressure force is applied by vacuuming of the assembly to be sealed.

5. The method according to any of claims 1 to 4, **characterized in that** the vacuuming is performed by means of at least one flexible or semi-rigid membrane (3) serving as a counter-mold.

6. The method according to any one of claims 1 to 5, **characterized in that** the pressure force is applied on the adhesive layer (6) via at least one draining layer (7).

7. The method according to any one of claims 1 to 6, **characterized in that** it comprises an additional step aiming to apply at least one fiber ply (8) on the adhesive layer (6).

8. The method according to claim 7, **characterized in that** the fiber ply (8) comprises at least one ply of non-woven fibers, in particular of carbon fibers, having a homogeneous permeability at the fibers.

9. The method according to any one of claims 7 or 8, **characterized in that** the fiber ply (8) is a ply of dry fibers.

10. The method according to any one of claims 7 to 9, **characterized in that** it comprises an additional step aiming to apply resin according to a resin transfer molding method, in particular under vacuum, and to proceed with the polymerization of said resin in the same coating.

11. The method according to any one of claims 7 to 10, **characterized in that** it comprises an intermediate additional step aiming to preform the plies of fibers.
